# FASCICULE DE BREVET EUROPEEN

(11) **EP 4 237 287 B1**
(45) Date de publication et mention de la délivrance du brevet: **29.01.2025**
(21) Numéro de dépôt: 21782567.8
(22) Date de dépôt: 28.09.2021
(51) Int. Cl.: B60R 11/02, B60R 13/02, B60R 11/00

(54) **GARNITURE POUR MONTANT DE BAIE ET VÉHICULE AUTOMOBILE ASSOCIÉ**
VERKLEIDUNG FÜR EINEN FENSTERPFOSTEN UND ZUGEHÖRIGES KRAFTFAHRZEUG
TRIM FOR A WINDOW POST, AND ASSOCIATED MOTOR VEHICLE

(30) Priorité: 29.10.2020 FR 2011028
(43) Date de publication de la demande: 06.09.2023
(73) Titulaire: Renault s.a.s, 92100 Boulogne Billancourt (FR)
(72) Inventeur: BLIN, Fabrice, 78084 GUYANCOURT CEDEX (FR); GALEA, Christophe, 78084 guyancourt cedex (FR)
(86) Numéro de dépôt international: PCT/EP2021/076673
(87) Numéro de publication internationale: WO 2022/089864

(56) Documents cités:
- EP-A1- 2 211 562
- EP-A1- 3 518 553
- EP-A2- 1 106 439
- CN-A- 105 835 787
- CN-U- 210 591 695
- DE-A1- 102009 036 714
- JP-A- 2010 179 680
- JP-A- 2010 179 880
- US-A1- 2002 097 889
- US-A1- 2007 013 200

## Description

La présente invention concerne les garnitures d'éléments de carrosserie pour véhicule automobile, et plus particulièrement une garniture pour montant de baie, et un véhicule automobile comprenant une telle garniture.

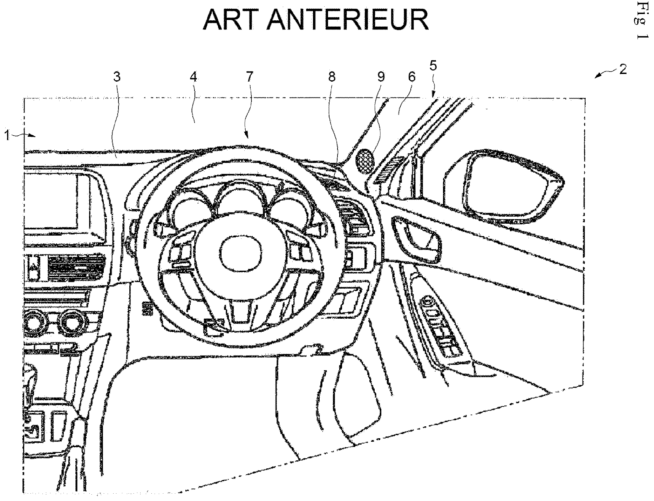

Le document EP 3 518 553 divulgue un habitacle 1 d'un véhicule automobile 2 représenté à la figure 1.

L'habitacle 1 comprend une planche de bord 3 surmontée d'un pare-brise 4 posé sur des montants de baie 5 recouverts chacun d'une garniture 6, un poste de conduite 7, et une bouche d'aération latérale 8 disposée dans la planche de bord 3.

La zone délimitée entre le pare-brise 4, le montant de baie 5 et le poste de conduite 7 comprend généralement un accès aux moyens de fixation de la planche de bord 3 sur le véhicule 2, l'interface entre la planche de bord 3 et la garniture 6, un conduit d'alimentation de la bouche d'aération latérale 8, et un haut-parleur 9.

Afin d'intégrer ces différents éléments dans cette zone de dimension limitée, un compromis sur l'emplacement des différents éléments est nécessaire.

Pour libérer de l'espace dans cette zone, le haut-parleur 8 est disposé dans la garniture 6.

Cependant, la disposition du haut-parleur 8 dans la garniture selon une direction transversale du véhicule dégrade la qualité du son émis. En effet une implantation du haut-parleur avec une orientation verticale et proche du pare-brise est bien plus favorable d'un point de vue acoustique et offre une meilleure perception des fréquences du son par les occupants du rang deux par rapport à des orientations du haut-parleur sur la garniture du montant de baie orienté suivant l'axe transversale ou longitudinal du véhicule.

En outre, l'agencement de ladite zone complique l'accès aux moyens de fixation de la planche de bord 3 sur le véhicule 2.

On pourra également se référer aux documents US 2007/0013200, US 2002/0097889 et EP 1106439 qui divulguent un haut-parleur logé dans une garniture de montant de baie selon une direction transversale du véhicule automobile. Le document JP 2010/179680 A divulgue également une paire de garnitures de montant avant disposées des deux côtés du tableau de bord d'un véhicule, garnitures correspondant au préambule de la revendication 1.

On pourra en outre se référer au document EP2211526 qui divulgue un haut-parleur intégré dans la planche de bord d'un véhicule automobile dans ladite zone et orienté selon une direction verticale de manière à optimiser les performances acoustiques du haut-parleur.

Le document JP2010/179880 divulgue aussi un haut-parleur dans une planche de bord de véhicule automobile.

Cependant, le remplacement du haut-parleur nécessite de démonter la planche de bord, ou nécessite l'ajout d'une pièce amovible sur la planche de bord permettant l'accès au haut-parleur, et la localisation du haut-parleur dans la planche de bord nécessite une réservation d'espace dans ladite zone.

Il est donc proposé de pallier tout ou partie des inconvénients précités et, en particulier, de disposer le haut-parleur de manière à optimiser ses performances acoustiques tout en facilitant l'accès aux moyens de fixation de la planche de bord sur le véhicule automobile.

Au vu de ce qui précède, l'invention propose une garniture pour montant de baie de véhicule automobile, garniture comprenant les caractéristiques de la revendication 1.

Selon une caractéristique, la surface de la languette selon un plan défini par les directions longitudinale et transversale est déterminée de manière à recouvrir des moyens de fixation de la planche de bord sur le véhicule et permettre le passage d'outils pour mettre en oeuvre les moyens de fixation.

De préférence, la garniture comprend une section transversale variable de sorte que la garniture forme sensiblement un Y, la partie inférieure ayant la section la plus grande.

Avantageusement, la languette comprend une face inférieure et une face supérieure opposée à la face inférieure, la face inférieure étant destinée à être logée dans la planche de bord et comprenant des moyens de fixation du haut-parleur sur la languette.

Conformément à l'invention, la languette comprend, dans son épaisseur orientée selon une direction verticale du véhicule, une grille configurée pour diffuser des sons générés par le haut-parleur, la grille étant obtenue par moulage de la garniture.

L'invention a également pour objet un véhicule automobile comprenant une garniture telle que définie précédemment, la garniture étant fixée sur un montant du pare-brise.

Selon une caractéristique, le véhicule comprend en outre une planche de bord et des moyens de fixation de la planche de bord sur le véhicule, la languette recouvrant lesdits moyens.

De préférence, le véhicule comprend en outre un haut-parleur supporté par la languette.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1],
   dont il a été fait mention précédemment, illustre schématiquement un poste de conduite d'un véhicule automobile selon l'état de la technique,
[Fig 2]
   illustre un véhicule automobile selon l'invention,
[Fig 3]
[Fig 4]
   illustrent un exemple d'habitacle du véhicule , et
[Fig 5]
   illustre une coupe de l'habitacle lorsque la garniture selon l'invention est retirée.

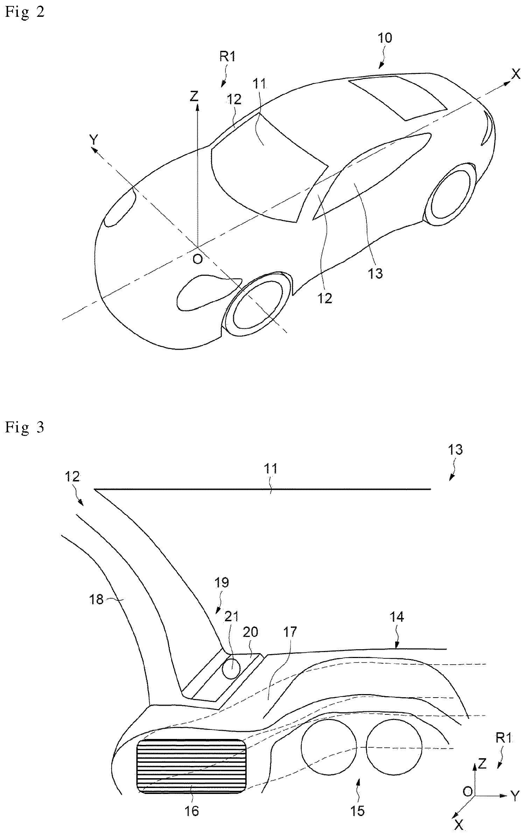

La figure 2 illustre un véhicule automobile 10 orienté selon un repère R1(O, X, Y, Z) orthonormé direct et montre en particulier le pare-brise 11, les deux montants de baie 12 délimitant le pare-brise 11 et l'habitacle 13 du véhicule.

Le repère R1 comprend une origine O, un premier axe X orienté selon une direction avant-arrière du véhicule 10, un deuxième axe Y selon une direction transversale du véhicule orienté vers la droite du véhicule 10 selon le sens de roulage normal du véhicule 10, et un troisième axe Z selon une direction verticale du véhicule.

En référence à la figure 3, l'habitacle 13 comprend une planche de bord 14 s'étendant selon le premier axe X et le deuxième axe Y et comportant un poste de conduite 15 et une bouche d'aération latérale 16.

Le poste de conduite 15 comporte des compteurs et un volant de direction (non représenté).

La bouche d'aération latérale 16 est reliée à une conduite d'alimentation 17 représentée en pointillés.

Une garniture 18 habille la partie du montant 12 située dans l'habitacle 13, la garniture étant obtenue par exemple par moulage d'une matière plastique.

La garniture 18 comprend une partie inférieure 19 s'intégrant dans la planche de bord 14, et comprend une languette 20 s'étendant longitudinalement selon une première direction et transversalement selon une deuxième direction, qui correspondent respectivement au premier axe X et au deuxième axe Y.

L'épaisseur de la languette 20 s'étend selon le troisième axe Z.

La languette 20 est par exemple dimensionnée de sorte que la languette 20 et la planche de bord 13 soient au même niveau pour former une surface plane.

La garniture 18 comprend une section transversale variable de sorte que la garniture forme sensiblement un Y, la partie inférieure 19 ayant la section la plus grande.

La languette 20 comprend en outre dans son épaisseur une grille 21, par exemple circulaire, obtenue par moulage de la garniture 18 de sorte que la garniture ne nécessite pas de grille rapportée.

La conduite d'alimentation 17 est disposée dans la planche de bord 14 de sorte qu'elle ne soit pas en-dessous de la garniture 18 selon le troisième axe Z.

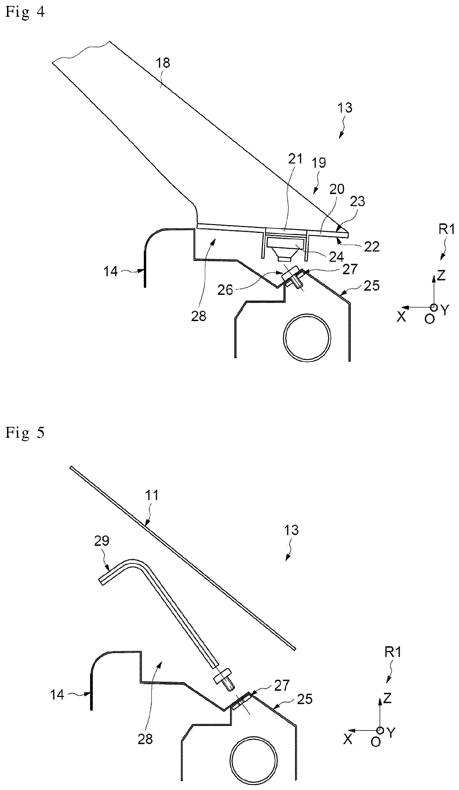

On se réfère à la figure 4 qui illustre une coupe selon un plan défini par les premier et troisième axes X, Z et passant par le centre de la grille 21.

La languette 20 comprend une face inférieure 22 logée dans la planche de bord 14 et une face supérieure 23 opposée à la face inférieure.

Un haut-parleur 24 est fixé sur la face inférieure 22 de la languette par des premiers moyens de fixation, par exemple par encliquetage ou vissage.

Le haut-parleur 24 est par exemple du type « tweeter ».

Les premiers moyens de fixation sont disposés sur la face inférieure 22 de sorte que le haut-parleur soit orienté selon la direction verticale du véhicule, dans une position dans laquelle la membrane du haut-parleur 24 est perpendiculaire au troisième axe Z de sorte que les sons émis par le haut-parleur 24 se propagent initialement à travers la grille 21 selon l'axe Z avant d'être diffusés dans l'habitacle 13.

Cette orientation permet d'optimiser la qualité acoustique du son généré par le haut-parleur dans l'habitacle 13, à travers la grille 21.

Comme le haut-parleur 24 est solidaire de la garniture 18, son démontage nécessite seulement le démontage de la garniture 18.

En outre, comme le haut-parleur 24 est dissimulé sous la languette 20, l'aspect visuel de l'habitacle 13 est amélioré.

La grille 21 diffuse les sons générés par le haut-parleur 24.

La planche de bord 14 est montée sur une traverse 25 du véhicule 10 par des deuxièmes moyens de fixation comportant par exemple au moins une vis 26 coopérant avec une plaquette taraudée de la traverse 25.

Comme l'espace en-dessous de la languette 20 ne comporte pas d'élément du véhicule 10, comme par exemple un haut-parleur ou un conduit d'alimentation, la planche de bord 14 peut comprendre par exemple une cavité 28 logeant la tête de vis 26.

La surface de la languette 20 définie selon un plan comprenant les premier et deuxième axes X, Y est déterminée de manière à recouvrir les deuxièmes moyens de fixation et en outre pour permettre le passage d'outils pour mettre en oeuvre les deuxièmes moyens de fixation.

La figure 5 illustre la coupe selon le plan défini par les premier et troisième axes X, Z et passant par le centre de la grille 21 lorsque la garniture 18 est retirée de l'habitacle 13.

La vis 26 a été retirée par un outil 29.

La cavité 28 permet de dégager suffisamment d'espace pour accéder aux deuxièmes moyens de fixation recouverts par la languette 20 de manière à démonter aisément la planche de bord 14 en introduisant l'outil 29 dans la cavité 28.

## Revendications

1. Garniture (18) pour montant de baie (12) de véhicule automobile (10), comprenant une partie inférieure (19) configurée pour être intégrée dans une planche de bord (14) du véhicule, la partie inférieure de la garniture comprenant une languette (20) s'étendant selon une direction longitudinale (X) et une direction transversale (Y), ladite languette étant configurée pour supporter un haut-parleur et comprenant, dans son épaisseur orientée selon une direction verticale (Z) du véhicule (10), une grille (21) configurée pour diffuser des sons générés par le haut-parleur (24), **caractérisée en ce que** la languette est configurée pour supporter un haut-parleur (24) orienté selon une direction verticale (Z) et **en ce que** la grille est obtenue par moulage de la garniture .

2. Garniture selon la revendication 1, comprenant une section transversale variable de sorte que la garniture (18) forme sensiblement un Y, la partie inférieure (19) ayant la section la plus grande.

3. Garniture selon l'une quelconques des revendications 1 ou 2, dans laquelle la languette (20) comprend une face inférieure (22) et une face supérieure (23) opposée à la face inférieure, la face inférieure étant destinée à être logée dans la planche de bord (14) et comprenant des moyens de fixation du haut-parleur sur la languette.

4. Véhicule automobile (10) comprenant une garniture (18) selon l'une quelconque des revendications précédentes, la garniture étant fixée sur un montant (12) du pare-brise (11).

5. Véhicule selon la revendication 4, comprenant en outre une planche de bord (14) et des moyens de fixation (26, 27) de la planche de bord sur le véhicule, la languette (20) recouvrant lesdits moyens de fixation (26, 27), la surface de la languette (20) selon un plan défini par les directions longitudinales (X) et transversale (Y) étant déterminée de manière à recouvrir des moyens de fixation (26, 27) de la planche de bord sur le véhicule (10) et permettre le passage d'outils (29) pour mettre en oeuvre les moyens de fixation.

6. Véhicule selon la revendication 5 comprenant en outre un haut-parleur (24) supporté par la languette (20).

## Patentansprüche

1. Verkleidung (18) für eine A-Säule (12) eines Kraftfahrzeugs (10), beinhaltend einen unteren Teil (19), der dazu konfiguriert ist, in ein Armaturenbrett (14) des Fahrzeugs integriert zu werden, wobei der untere Teil der Verkleidung eine Zunge (20) beinhaltet, die sich entlang einer Längsrichtung (X) und einer Querrichtung (Y) erstreckt, wobei die Zunge dazu konfiguriert ist, einen Lautsprecher zu stützen, und in ihrer Dicke, die entlang einer vertikalen Richtung (Z) des Fahrzeugs (10) orientiert ist, ein Gitter (21) beinhaltet, das dazu konfiguriert ist, von dem Lautsprecher (24) erzeugten Schall zu verbreiten, **dadurch gekennzeichnet, dass** die Zunge dazu konfiguriert ist, einen Lautsprecher (24) zu stützen, der entlang einer vertikalen Richtung (Z) orientiert ist, und dass das Gitter durch Formen der Verkleidung erhalten wird.

2. Verkleidung nach Anspruch 1, beinhaltend einen variablen Querschnitt, sodass die Verkleidung (18) im Wesentlichen ein Y bildet, wobei der untere Teil (19) den größten Querschnitt aufweist.

3. Verkleidung nach einem der Ansprüche 1 oder 2, wobei die Zunge (20) eine untere Fläche (22) und eine zu der unteren Fläche entgegengesetzte obere Fläche (23) beinhaltet, wobei die untere Fläche dazu bestimmt ist, in dem Armaturenbrett (14) aufgenommen zu sein, und Mittel zur Befestigung des Lautsprechers an der Zunge beinhaltet.

4. Kraftfahrzeug (10), das eine Verkleidung (18) nach einem der vorhergehenden Ansprüche beinhaltet, wobei die Verkleidung an einer Säule (12) der Windschutzscheibe (11) befestigt ist.

5. Fahrzeug nach Anspruch 4, ferner beinhaltend ein Armaturenbrett (14) und Mittel zur Befestigung (26, 27) des Armaturenbretts an dem Auto, wobei die Zunge (20) die Befestigungsmittel (26, 27) abdeckt, wobei die Oberfläche der Zunge (20) gemäß einer Ebene, die durch die Längsrichtung (X) und die Querrichtung (Y) definiert wird, so bestimmt ist, dass sie die Mittel zur Befestigung (26, 27) des Armaturenbretts an dem Fahrzeug (10) abdeckt und den Durchgang von Werkzeugen (29) zur Einrichtung der Befestigungsmittel gestattet.

6. Fahrzeug nach Anspruch 5, ferner beinhaltend einen Lautsprecher (24), der von der Zunge (20) gestützt wird.

## Claims

1. Trim (18) for a window pillar (12) of a motor vehicle (10), comprising a lower part (19) configured to be integrated in a dashboard (14) of the vehicle, the lower part of the trim comprising a tongue (20) extending in a longitudinal direction (X) and a transverse direction (Y), said tongue being configured to support a loudspeaker and comprising, in its thickness oriented in a vertical direction (Z) of the vehicle (10), a grille (21) configured to deliver sounds generated by the loudspeaker (24), **characterized in that** the tongue is configured to support a loudspeaker (24) oriented in a vertical direction (Z) and **in that** the grille is obtained by moulding the trim.

2. Trim according to Claim 1, comprising a transverse section that is variable such that the trim (18) substantially forms a Y, the lower part (19) having the largest section.

3. Trim according to either one of Claims 1 and 2, wherein the tongue (20) comprises a lower face (22) and an upper face (23) opposite the lower face, the lower face being intended to be housed in the dashboard (14) and comprising means for fastening the loudspeaker to the tongue.

4. Motor vehicle (10) comprising a trim (18) according to any one of the preceding claims, the trim being fastened to a pillar (12) of the windscreen (11).

5. Vehicle according to Claim 4, further comprising a dashboard (14) and means (26, 27) for fastening the dashboard to the vehicle, the tongue (20) covering said fastening means (26, 27), the surface area of the tongue (20) in a plane defined by the longitudinal (X) and transverse (Y) directions being determined so as to cover means (26, 27) for fastening the dashboard to the vehicle (10) and allow the passage of tools (29) so as to implement the fastening means.

6. Vehicle according to Claim 5, further comprising a loudspeaker (24) supported by the tongue (20).
